# EUROPEAN PATENT APPLICATION

(11) **EP 4 664 721 A1**
(43) Date of publication of application: **17.12.2025**
(21) Application number: 25180783.0
(22) Date of filing: 04.06.2025
(51) Int. Cl.: H02J 7/00, H02J 7/34, H01M 10/42

(54) **AN ENERGY STORAGE CIRCUIT WITH BYPASS FUNCTIONALITY FOR A HIGH-VOLTAGE DC ENERGY MANAGEMENT SYSTEM**

(30) Priority: 14.06.2024 DE 102024116760
(71) Applicant: Skeleton Technologies GmbH, 04420 Markranstädt (DE)
(72) Inventor: Iegorov, Mykola, 13623 Tallinn (EE); Raska, Martin, 69310 Laatsi (EE)
(74) Representative: KASTEL Patentanwälte PartG mbB

(57) **Abstract**

In order to improve high voltage DC systems the invention proposes an energy storage circuit for an energy storage module (18) comprising:
- a positive terminal (26) and a negative terminal (28);
- an energy storage assembly (30) configured for storing electrical energy, the energy storage assembly (30) including at least one energy storage cell and at least one sensor (35);
- a switching assembly (36) that is switchable into any of an operational state and a bypass state and optionally a cross-conduction state, wherein in the operational state the switching assembly (36) electrically connects the energy storage assembly (30) to the positive and negative terminals to supply them with electrical power, wherein in the cross-conduction state the switching assembly (36) short-circuits the energy storage assembly (30), wherein in the bypass state the switching assembly (36) allows a direct electrical connection between the positive terminal (26) and the negative terminal (28); and
- a energy storage local control unit (24) that is configured for detecting a fault condition of the energy storage assembly (30) based on the at least one sensor (35), and upon detecting the fault condition, for causing, preferably initiating, the switching assembly (36) to progress from the operational state through the cross-conduction state into the bypass state.

## Description

The invention relates to an energy storage circuit. The invention further relates to an energy storage module, an energy management system, and associated methods.

Energy storage modules based on supercapacitors are becoming more and more popular in various applications that demand high peak powers on short notice. One such application is, for example, supplying electrical starter motors of larger engines instead of using conventional lead acid batteries.

Another up and coming application is grid stabilization, in particular in datacenters for AI applications. At inference time, AI systems typically involve a power surge due to the sudden high computational demand that quickly subsides after completion. Energy storage modules based on supercapacitors are suitable to mitigate the effects such a power surge as supercapacitors can be easily charged and are able to provide a large peak power for a short amount of time.

Energy storage cells as described herein may be classified into three varieties: batteries, capacitors and supercapacitors (sometimes also called ultracapacitors).

The term "battery" as used herein is an energy storage cell that stores electrical energy exclusively by electrochemical redox reaction. This typically includes primary batteries that can only be discharged. However, as used herein, the term "battery" exclusively means secondary battery, i.e., a battery that may be charged and discharged.

The term "capacitor" as used herein is an energy storage cell that stores electrical energy electrostatically.

The term "supercapacitor" as used herein is a special kind of capacitor and may be further distinguished into a double-layer capacitor (DLC) that stores energy electrostatically using a Helmholtz double layer, a pseudocapacitor that stores electrical energy electrochemically by Faradaic electron charge-transfer such as intercalation or electrosorption, or a hybrid capacitor that uses both mechanisms of the DLC and the pseudocapacitor.

Different methods for detecting abnormally behaving cells and solutions to mitigate said behavior have been developed. Reference is made to the following approaches:
Unpublished German patent application 10 2024 102 852.1 discloses a method for abnormal cell detection and balancing, the disclosure of which is incorporated herein by reference.

US 2015 / 0 044 527 A1 discloses a battery management circuit that senses individual voltage of each battery cell for detecting a failing cell. The battery management circuit prevents a failing cell from contributing to an output voltage of the battery.

US 11 133 133 B2, US 10 649 040 B2 and US 11 124 087 B2 disclose measures for identifying abnormal cells based on leakage current.

EP 3 800 762 A1 discloses a control unit that is capable of detecting an abnormal cell in a battery module and of controlling cell balancing.

US 7 683 575 B2 discloses a method for identifying and selectively disconnecting a faulty battery cell within a battery pack of several battery cells.

US 9 097 774 B2 discloses a method for identifying a faulty cell based on the amount the cell requires balancing.

US 9 866 043 B2 discloses an apparatus that disconnects a faulty cell by activating a sacrificial component by providing a current through the faulty cell.

US 2021 / 0 281 084 A1 discloses a method for performing a balancing operation based on a difference of voltages.

US 8 796 993 B2 discloses a method for balancing based on a Coulomb threshold level.

US 5 227 259 A discloses an apparatus for locating and electrically isolating failed cells in a network of cells within a battery.

US 5 894 212 A discloses a battery cell protection system that isolates a faulty cell.

US 10 317 477 B2 discloses an inspection method for a secondary battery in off-line mode.

The isolation of generally faulty, such as overcharged, over-discharged or imbalanced supercapacitor modules, is a vital task during any abnormal condition, especially for high voltage DC applications. In these applications breaking the high-voltage DC current can be challenging due to the nature of the current.

A bypass, e.g., for supercapacitors, is a function that allows to redirect current from a faulty energy storage cell to another circuit on a permanent basis or in cases of abnormal voltage. Conventional techniques used for bypassing the supercapacitor cell or module from its actual circuit is typically done by connecting a resistor, a diode, a reverse diode, or any other transistors across the supercapacitor cell/module that is to be bypassed. These techniques generally take much time, which can increase the risk of damage that occurs on a shorter timeframes, such as a fraction of a second. A typically, these techniques take more than a few seconds, e.g., more than ten seconds, to bypass the supercapacitors.

Although this idea of bypassing faulty electronic components is generally known, there is still a need for quicker and safer bypassing techniques in the field.

It is the object of the invention to improve electrical safety in high voltage DC systems. The object is achieved by the subject-matter of the independent claims. Preferred embodiments are subject-matter of the dependent claims.

The invention provides energy storage circuit comprising a positive terminal and a negative terminal configured for connecting external devices; an energy storage assembly configured for storing electrical energy, the energy storage assembly including at least one energy storage cell and at least one sensor; a switching assembly that is switchable into any of an operational state and a bypass state and optionally into a cross-conduction state, wherein in the operational state the switching assembly electrically connects the energy storage assembly to the positive and negative terminals to supply them with electrical power, wherein in the bypass state the switching assembly allows a direct electrical connection between the positive terminal and the negative terminal, wherein in the cross-conduction state the switching assembly short-circuits the energy storage assembly and/or connects the energy storage assembly to a bypass connection that connects the positive and negative terminals; and a energy storage local control unit that is configured for detecting a fault condition of the energy storage assembly based on the at least one sensor, and upon detecting the fault condition, for causing, preferably initiating, the switching assembly to progress from the operational state through the cross-conduction state into the bypass state.

Preferably, at least one energy storage cell includes is a supercapacitor. Preferably, at least half of the energy storage cells are supercapacitors. Preferably, each energy storage cell is a supercapacitor.

The proposed invention is related to isolating a faulty energy storage cell, e.g., a supercapacitor circuit or entire module from the energy storage rack or electrical system current. Fault conditions may be detected using well-known methods. In general the fault conditions are determined to be present, if certain conditions are met by electrical parameters of the system. In the event of a fault condition, such as overcharge, over-discharge, severe imbalance, emergencies, maintenance, repair, and improvement of efficiency or performance, the circuit should by bypassed within a few milliseconds, in particular to prevent potential damage to the supercapacitor and other components. This can help to mitigate or even avoid the risk of accelerated wear, material damage, excessive overheating, electrolyte leaking, chemical pollution, and fire.

The way in which the switch occurs, e.g., progressively from operational state via cross-conduction state to bypass state, allows a quick isolation of faulty energy storage cells without interrupting the energy storage functionality followed by a complete electrical bypass that avoids any further participation of the faulty energy storage cells.

Preferably, the switching assembly comprises a closing switch that is normally open and configured, upon an activation signal, to close, wherein in the operational state the closing switch is open, wherein in the cross-conduction state and the bypass state the closing switch is closed to form an electrical connection between the positive terminal and the negative terminal that bypasses the energy storage assembly. Preferably, the closing switch includes or consists of a closing pyro switch.

In the operational state, the bypass path is interrupted. In the cross-conduction state, the closing switch allows a brief time-period of short circuit of the energy storage assembly and/or conduction to the bypass connection. The cross-conduction state creates a path for the high-voltage system current so that breaking the current can be mitigated or even avoided, when the opening switch is opened. The pyro switch guarantees safe and fast switching after initiation. Furthermore, the pyro switch is typically irreversible by accident and thus users and system alike are protected from further fault conditions or injuries.

Preferably, the switching assembly comprises an opening switch that is normally closed and configured, upon an activation signal, to open, wherein in the operational state and the discharging state the opening switched is closed and in the bypass state the opening switch is open. Preferably, the opening switch includes or consists of an opening pyro switch or a fuse, e.g., a DC power fuse.

In the operational state, the opening switch connects the energy storage assembly to the terminals thereby allowing electrical energy to be charged to or discharged from the supercapacitors. In the cross-conduction state, the opening switch allows a brief period of short-circuitand/or connection of the terminals. This allows avoiding breaking the HV current. In the bypass state, the opening switch makes sure that the energy storage assembly can no longer be supplied with electrical power. In case of a fuse, the brief short-circuit during the cross-conduction state causes the fuse to break the current.

Preferably, the closing switch and the opening switch are combined in a single component or assembly. The entire switching sequence can be performed by a single element, which can be easily replaced and maintained.

Preferably, the switching assembly includes a surge protection device that is arranged to absorb a voltage peak caused by the switching assembly progressing to the bypass state. Preferably, the surge protection device is electrically coupled in parallel to the opening switch. A surge protection device allows to bear the brunt of breaking the current flow (if any) from or to the energy storage assembly. This is in particular useful during the - albeit short lived - cross-conduction state.

Preferably, the switching assembly is continuously operable in a discharge state, wherein in the discharge state the energy storage assembly is continuously discharged, if no charging current is applied. Preferably, the switching assembly comprises at least one discharging resistor that is arranged to continuously discharge the energy storage assembly or the at least one energy storage cell, wherein the discharging resistor is dimensioned such that a discharge time for discharging the energy storage assembly or each energy storage cell is at least one day, preferably up to seven days. In this configuration, the discharge resistor is engaged regardless of bypass function and thus balancing of the modulemay be facilitated. Furthermore, after being in the bypass state, the supercapacitors discharge without additional action and safely enough that no special cooling is required.

Preferably, the switching assembly is additionally switchable into a discharge state after the bypass state, wherein in the discharge state the energy storage assembly is discharged. Preferably, the switching assembly comprises a discharging switch that, in its closed state, allows discharging of the energy storage assembly via a discharging resistor, wherein the discharging switch is operatively coupled to the energy storage local control unit to be switched between the closed state and an open state, in which discharging of the energy storage assembly via the discharging resistor is prevented. Typically, when in the bypass state, the energy storage cells - depending on their conditions before - may still contain electrical energy. This remainder can be safely removed by a typical discharge circuit with a resistor. Thus, in addition to a quick cut-off of the supercapacitors, they can also be brought into a safe state, e.g., for diagnostic and/or maintenance.

Preferably, the discharging resistor is dimensioned such that a discharge time for discharging the energy storage assembly exceeds 30 min, preferably exceeds one hour. A properly dimensioned discharge resistor can be a small and inexpensive component. Active cooling can be avoided and the general cooling by air available is sufficient to discharge the remaining energy from the supercapacitors. This advantage is bought at the expense of discharging time. This allows a combination of a quick bypass time (e.g. about 1 ms) with a safe and unproblematic discharge time (e.g. 30 min to an hour).

The invention provides an energy storage module for an energy storage management system, the energy storage module comprising an energy storage circuit and an energy cell management system that is configured for monitoring and controlling the energy storage assembly.

The invention provides a method for operating an energy storage circuit or energy storage module, the method comprising:
a) measuring at least one electrical parameter of the energy storage assembly and/or the at least one energy storage cell with the at least one sensor;
b) evaluating the electrical parameter with the energy storage local control unit, and upon detecting the a fault condition causing the switching assembly to progress from the operational state through the optional cross-conduction state into the bypass state.

Preferably, the energy storage local control unit merely initiates the switching assembly to progress through the different states, and the progression is carried out by the switching assembly.

Preferably, the energy storage local control unit activates the closing switch to close to initiate the cross-conduction state and the bypass state is obtained after the closing switch is closed and forms an electrical connection between the positive terminal and the negative terminal that bypasses the energy storage assembly.

Preferably, the energy storage local control unit activates a firing pellet of the closing pyro switch.

Preferably, the energy storage local control unit activates the opening switch to open to transition into the bypass state.

Preferably, the a current surge caused by closing the closing switch activates the opening switch to open to transition into the bypass state.

Preferably absorbing a voltage peak caused by opening the opening switch with the surge protection device.

Preferably, the energy storage local control unit closes the discharging switch to discharge the energy storage assembly via a discharging resistor, when the energy storage module is in the bypass state.

The invention provides an energy management system configured for grid stabilization and/or providing peak electrical power, comprising a plurality of energy storage modules, that are electrically connected to each other, and a system control unit that is operatively coupled to each energy storage local control unit.

Preferably, each energy storage local control unit is configured to, upon detecting the fault condition or determining the respective energy storage module to be in the bypass state, report the respective energy storage module to the system control unit, and the system control unit, upon receiving the report, recalculates at least one electrical parameter of the energy management system, such as available electrical energy, available electrical power, available electrical current, and/or available electrical voltage.

The invention provides a method for operating an energy management system, the method comprising each energy storage local control unit, upon detecting the fault condition or determining the respective energy storage module to be in the bypass state, reporting the respective energy storage module to the system control unit, and the system control unit, upon receiving the report, recalculating at least one electrical parameter of the energy management system.

Subsequently further features, effects, or advantages of the invention are described in more detail. It should be noted that not all elements must be present at the same time or with the same quality.

In some embodiments it is an idea to bypass the supercapacitor circuit without discharging the circuit. In some embodiments the bypassing of the supercapacitor circuit has been done with pyro switches or pyro fuses. In some embodiments this bypassing technique is applicable for supercapacitor modules connected in both options, series and parallel. In some embodiments this technique does not require the complete discharge of the circuit which needs to get bypassed. Therefore, it does not necessarily require a discharge resistor. In some embodiments the proposed bypassing technique is comparatively quicker than existing solutions, as it can be completed in a time range close to one millisecond. In some embodiments the bypass prevents excessive heat generation within the system since there is no need to discharge the supercapacitor circuits.

During the occurrence of an electrical fault, the faulty supercapacitor module can get bypassed within a millisecond without discharging. This can avoid a voltage and/or current imbalance within the supercapacitor energy storage system. This is significantly faster than existing solutions which typically take, as a first step, at least a minute to discharge the supercapacitor module under great heat generation, and, as a second step, to isolate the module.

In some embodiments the bypass circuit comprises the combination of two pyro switches to isolate the supercapacitor module. In some embodiments, whenever an abnormal condition occurs both the switches operate swiftly to bypass the faulty or imbalanced supercapacitor module. In some embodiments, first, one of the switches shorts the positive and negative connections of the supercapacitor module and after that, with minimum delay the other switch disconnects the supercapacitor module from the positive connection. Thus both capacitor circuit and the respective switch are unloaded or bypassed from the overall supercapacitor energy storage system.

In some embodiments the local control unit detects any abnormal situation, for example - high voltage, or low voltage, and immediately activates bypassing of the targeted supercapacitor module. In some embodiments the local control unit then reports to the system level control unit that the targeted supercapacitor module is bypassed. In some embodiments the system level control unit recalculates accordingly the availability of capacitor circuits in the entire energy storage system and the available performance values (power, current, energy, voltage) in order to continue the use of capacitor circuits within specifications.

The main advantages achieved with the ideas presented herein are that the bypassing can be done within milliseconds and this technique can be applied to series or series combined with parallel connection of supercapacitor cells or modules.

In some embodiments a special changeover switch is activated by a pyro pill for very fast actuation, that surpasses mechanical switches actuated by solenoid, for example. In some embodiments two electrically synchronized switches are used that are separately activated by pyro pills.

In some embodiments bypassing can be done for capacitor circuits with series or series/parallel connection of capacitors.

In some embodiments bypassing is done without a significant discharge of the target capacitor circuit. In some embodiments The local control unit detects low voltage capacitor circuit fault (or high risk of upcoming capacitor fault) and then activates bypassing of that target capacitor circuit. In some embodiments one switch shorts the capacitor circuit positive and negative connections and with minimum delay another switch disconnects the capacitor circuit from the positive connection and that way unloads both the capacitor circuit and the respective switch.

In some embodiments bypassing of capacitor circuit could be done in a matter of one millisecond with special pyrotechnic low voltage switches.

In some embodiments an additional discharge circuit with a discharge resistor and discharge switch allows the bypassed module to be discharged, when the module is disconnected from the system. In some embodiments the discharge switch is closed after the bypass is done for a particular circuitry, so that additional power losses from resistive discharge are no factor for the system.

Optionally discharge resistor can be sized for a very slow discharge (matter of days) and they switch can be excluded from the circuitry. This allows an increase in electrical safety. Furthermore, controls and assembly can be improved. It is also possible to improve voltage balancing of the modules, even in case of electronics-enabled balancing with a permanently connected resistor.

In some embodiments one pyro switch can be changed to a DC power fuse. In this case the fuse is activated by the shorting of the other switch. This allows a simplification of controls, particularly as the fuse activates itself due to the high current).

In some embodiments a surge protection device (SPD) can be used to absorb the voltage peak caused by breaking the current.

In some embodiments the local control unit reports to the system level that the capacitor circuit is bypassed. In some embodiments the system level recalculates accordingly the availability of capacitor circuits in the entire energy storage and then available performance values (power, current, energy, voltage) in order to continue use of capacitor circuits within specifications.

In some embodiments it is possible to add a resistor for discharging. The discharge current can be very low which means the size of resistor can be small. After the bypassing, there is time for slowly discharging the faulty capacitor circuit.

Embodiments of the invention are described in more detail with reference to the accompanying schematic drawings that are listed below
- Fig. 1: depicts an embodiment of an energy management system;
- Fig. 2: depicts a first embodiment of an energy storage module;
- Fig. 3: depicts a second embodiment of an energy storage module;
- Fig. 4: depicts a third embodiment of an energy storage module;
- Fig. 5: depicts a fourth embodiment of an energy storage module;
- Fig. 6: depicts a fifth embodiment of an energy storage module;
- Fig. 7 to Fig. 9: depicts a function principle of an integrated pyro switch; and
- Fig. 10: depicts a function principle of separate pyro switches.

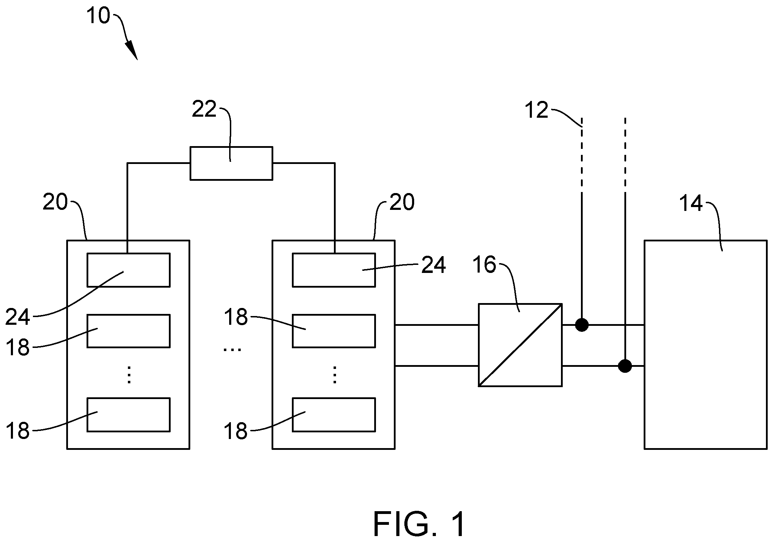

Referring to Fig. 1 an energy management system 10 comprises a grid supply line 12 that supplies an electrical load 14. The energy managmenet system 10 is preferably configured for and used in E-STATCOM applications.

The electrical load 14 can have phases in which it requires peak electrical power and more dormant phases in which the electrical power demand is steady and comparatively low. An example for such electrical load 14 is an AI datacenter. The energy management system 10 allows for fast reaction energy storage modules 18 to be connected to the grid supply line 12. It should be noted that the electrical load 14 can also have a different load characteristic than this.

The energy management system 10 comprises a power converter 16 that is configured to convert AC to DC current and vice versa. The power converter 16 is connected to the grid supply line 12 and the electrical load 14.

The energy management system 10 comprises a plurality of energy storage modules 18 that are preferably arranged in racks 20. The racks 20 can be connected in parallel and/or in series as the case may be. In other words, some racks 20 can be connected in series as a group, whereas others are connected in parallel as a group. These groups can be connected in series and/or in parallel to achieve the desired electrical parameters, in particular system voltage and available peak power. The energy storage modules 18 are connected to the power converter 16 to receive and supply electrical power.

The energy management system 10 comprises a system control unit 22 that is communicatively coupled to each energy storage module 18, specifically to a energy storage local control unit 24 thereof.

It should be noted that in a variant, when the energy management system 10 is connected to a grid supply line 12 that is a high voltage DC line the power converter 16 is a DC-DC-converter or can be omitted.

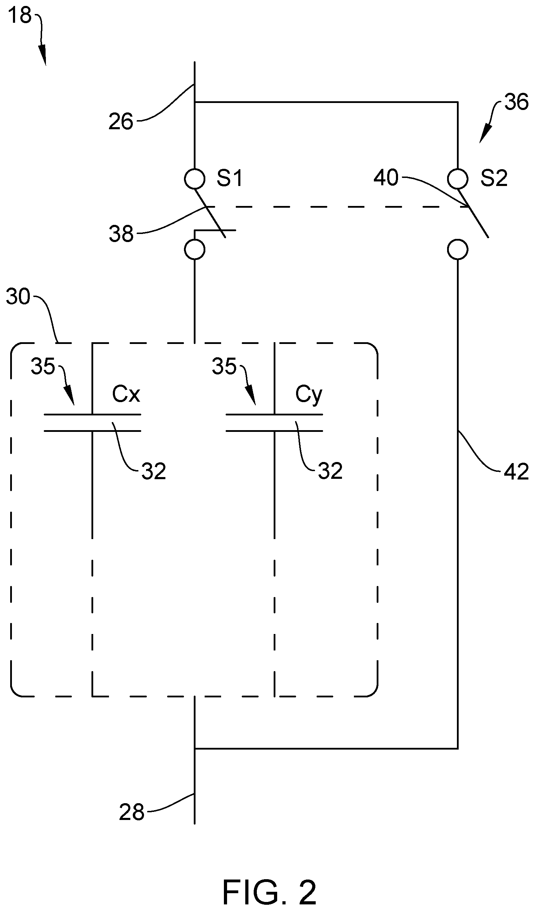

Referring to Fig. 2, a first embodiment of the energy storage module 18 is described.

The energy storage module 18 comprises a positive terminal 26 and a negative terminal 28. The terminals 26, 28 allow an electrical connection to other components, in particular to other energy storage module 18. The energy storage modules 18 may selectively be connected in series or in parallel.

The energy storage module 18 comprises an energy storage assembly 30. The energy storage assembly 30 includes a plurality of energy storage cells 32 in the form of supercapacitors. The energy storage cells 32 are connected together according to the intended application and the configuration depends on the module voltage and available peak power required for the application.

The energy storage assembly 30 further comprises at least one sensor 35 configured for measuring an electric parameter of the energy storage assembly 30, e.g., cell voltage. Other types of sensors are possible and can be used.

The energy storage module 18 comprises a switching assembly 36. The switching assembly 36 includes an opening switch 38 in the form of a pyro switch. The switching assembly 36 includes a closing switch 40 in the form of a pyro switch.

The opening switch 38 is electrically connected to one of the terminals 26, 28, e.g., the positive terminal 26, to the energy storage assembly 30 and the energy storage assembly 30. The other of the terminals 28, 26, e.g, the negative terminal 28, is permanently connected to the energy storage assembly 30.

The closing switch 40 is electrically connected to the same terminal 26, 28 as the opening switch 38, here the positive terminal 26. The closing switch 40 is electrically connected to the same terminal 28, 26 as the energy storage assembly 30, here the negative terminal 28.

The energy storage local control unit 24 is operatively coupled to the sensor 35 to receive data indicative of the electrical parameters. The energy storage local control unit 24 is operatively coupled to the switching assembly 36. The energy storage local control unit 24 is typically implemented at rack level. The energy storage local control unit 24 may be a distributed system. In other words, the energy storage local control unit 24 can be formed by more than one physical device, and the devices can be spread over several components, such as the energy storage modules 18 or racks 20.

Subsequently, the operation of the energy management system 10 is described in more detail.

Initially, the energy storage module 18 is in the operational state. In this state, the opening switch 38 electrically connects the positive terminal 26 with the energy storage assembly 30. The closing switch 40 is open and interrupts a bypass connection 42 from the positive terminal 26 to the negative terminal 28.

The energy storage local control unit 24 constantly monitors the energy storage assembly 30 using the sensor 35. If for some reason, a fault occurs in the energy storage assembly 30, the energy storage local control unit 24 detects that fault condition and initiates a switching process that progresses the switching assembly 36 from the operational state through a cross-conduction state to a bypass state. After initiation, the switching process progresses without further intervention from the energy storage local control unit 24. In other words the energy storage local control unit 24 can only initiate the switching process but not control its progression, which is given by the components involved. The switching process lasts for about 1 ms.

Soon after initiation, the switching process brings the switching assembly 36 into the cross-conduction state. The cross-conduction state is an intermediate state that lasts for a shorter period of time than the entire switching process. The cross-conduction state avoids an open state, which would otherwise break the HV system current. This can help to avoid arc formation.

In the cross-conduction state, the closing switch 40 is closed and connects the positive terminal 26 via bypass connection 42 to the negative terminal 28, while the opening switch 38 is still closed. Thus, a short-circuit is formed across the energy storage assembly 30 causing a surge and intense but brief discharge of the energy storage cells 32. The duration of the cross-conduction state is so short that no significant damage is inflicted upon the energy storage cells 32 or other components while at the same time breaking of the HV current can be avoided.

The switching process then progresses the switching assembly 36 to the bypass state. In the bypass state, the opening switch 38 is open and the electrical connection from the positive terminal 26 to the energy storage assembly 30 is interrupted. The system current can now flow from the positive terminal 26 via the bypass connection 42 to the negative terminal 28. The faulty energy storage assembly 30 is thus isolated from the system circuit.

The energy storage local control unit 24 sends a message to the system control unit 22 that the respective energy storage module 30 is now in bypass state and no longer participates in the system.

Upon receiving this message, the system control unit 22 recalculates the electrical parameters of the energy management system 10 without the faulty energy storage module 30, specifically available electrical energy, available electrical power, available electrical current, and/or available electrical voltage.

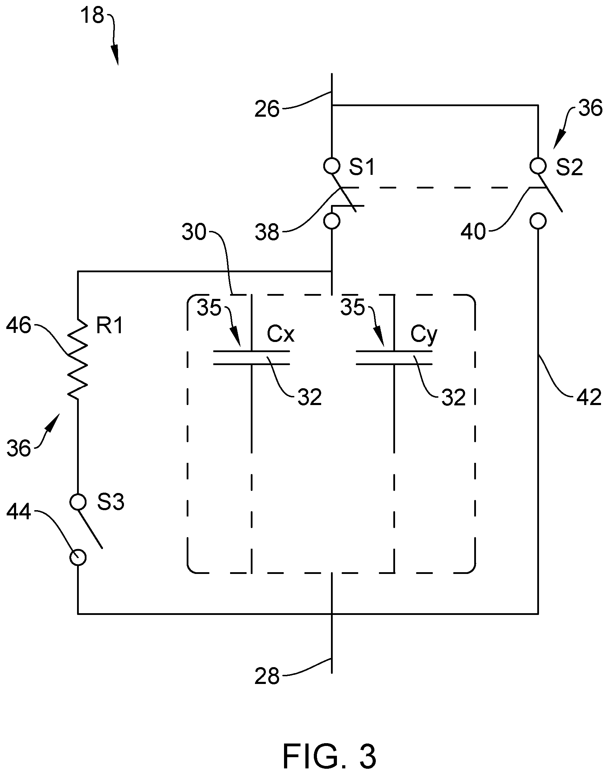

Referring to Fig. 3, a second embodiment of the energy storage module 18 is described only insofar as it differs from the first embodiment.

The energy storage module 18, specifically the switching assembly 36, further includes a discharging switch 44 and a discharging resistor 46. The discharging switch 44 is arranged to allow a discharging of the energy storage assembly 30 via the discharging resistor 46. The discharging switch 44 is operatively coupled to the energy storage local control unit 24.

When in the bypass state, the energy storage local control unit 24 closes the discharging switch 44 to discharge the energy storage assembly 30 over a time period of about half an hour to an hour. The discharging resistor 46 is dimensioned accordingly.

In a variant (not shown), the discharging switch 44 is omitted and the discharging resistor 46 is connected in parallel to the energy storage assembly 30 or the energy storage cells 32 allowing a permanent discharge. The discharging resistor 46 is dimensioned such that discharging takes at least one day, preferably several days.

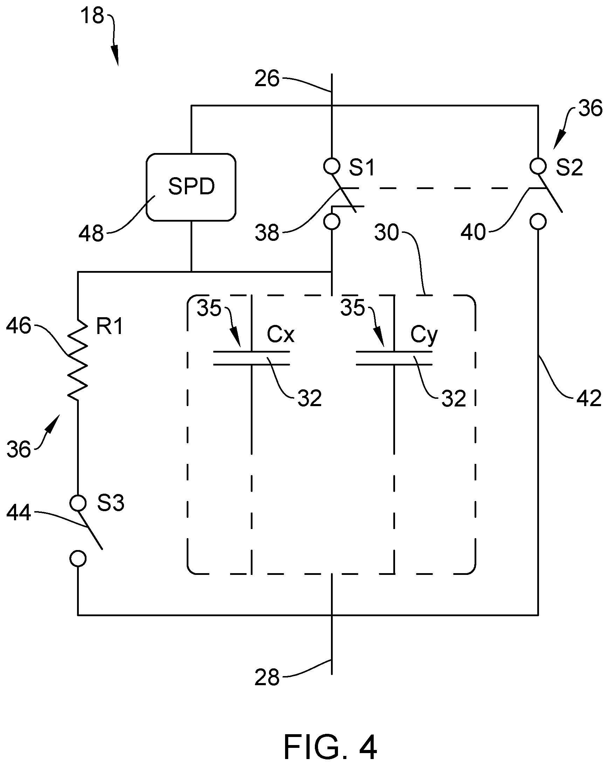

Referring to Fig. 4, a third embodiment of the energy storage module 18 is described insofar as it differs from the second embodiment.

The energy storage module 18 comprises a surge protection device (SPD) 48. The SPD 48 is connected in parallel to the opening switch 38. During the discharging state and the transition to the bypass state, i.e., when the local energy storage circuit current is breaking, the resulting surge is absorbed by the SPD 48.

In a variant (not shown) the SPD 48 is installed and the discharging switch and resistor 44, 46 are omitted.

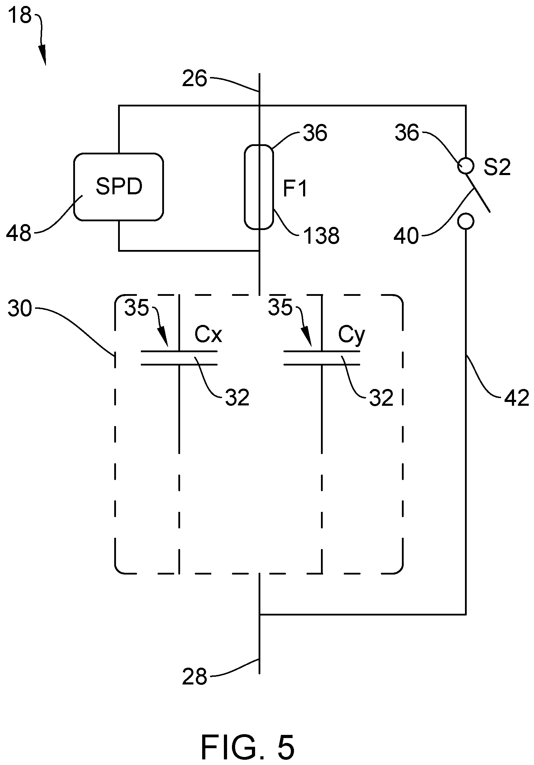

Referring to Fig. 5, a fourth embodiment of the energy storage module 18 is described insofar as it differs from the first embodiment.

An opening switch 138 is configured in the form of a DC power fuse, and the SPD 48 is connected in parallel to the opening switch 138.

Upon detecting a fault condition, the energy storage local control unit 24 initiates the switching progression by activating the closing switch 40. In the cross-conduction state, where the closing switch 40 is closed, the current resulting from the short-circuit exceeds the threshold of the DC power fuse and the opening switch 138 opens due to the short-circuit current. The resulting surge from opening the opening switch 138 is again absorbed by the SPD 48. While it is possible to omit the SPD 48, it is generally not recommended.

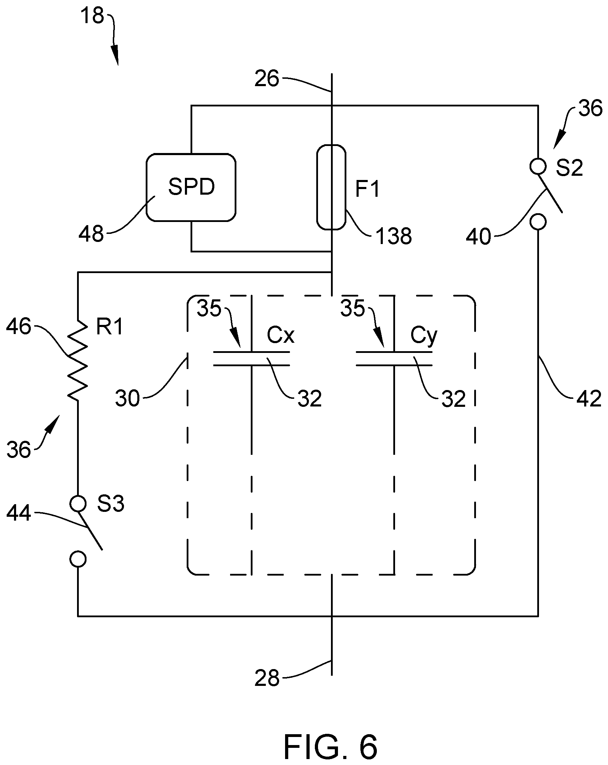

Referring to Fig. 6, a fifth embodiment of the energy storage module 18 is described insofar as it differs from the fourth embodiment. The energy storage module 18 has the discharging switch and resistor 44, 46 as described in the second embodiment. Similar to the second embodiment, it is possible to omit the discharging switch 44 and dimension the discharging resistor 46 accordingly.

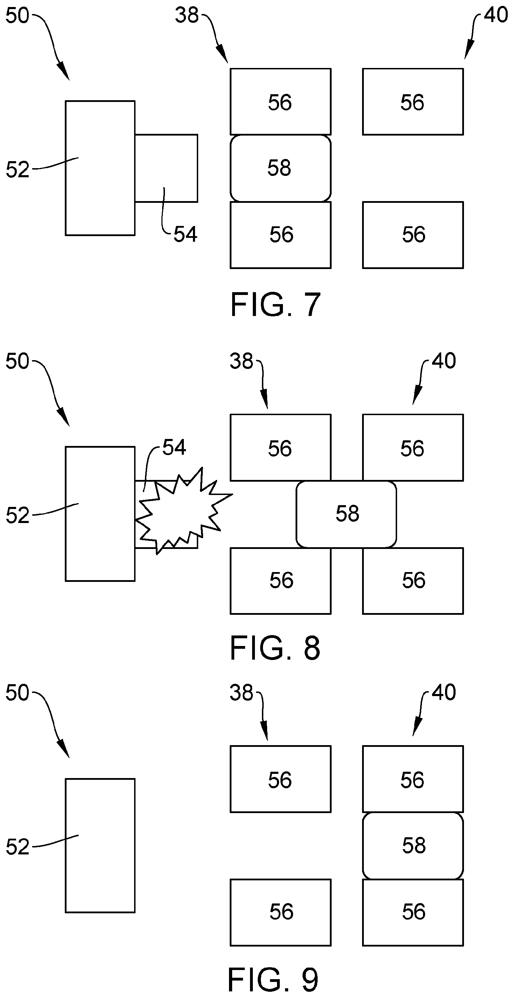

Referring to Fig. 7 to Fig. 9, a function principle of a pyro switch 50 is described in more detail, specifically a variant, where the opening switch 38 and the closing switch 40 are integrated in to a single component. The pyro switch 50 includes an electrical ignition 52 and a pyro pill 54. The pyro pill 54 is a small amount of explosive material. Furthermore, the pyro switch 50 includes a plurality of static contacts 56 and a movable contact 58. The static contacts 56 are organized in two pairs.

Fig. 7 shows the pyro switch 50 in the operational state. The movable contact 58 is in its starting position and electrically connects the first pair of static contacts 56. In other words, the opening switch 38 is closed and the closing switch 40 is open.

Fig. 8 shows that upon receiving an electrical signal, the electrical ignition 52 ignites the pyro pill 54. The expanding hot gases generated by the pyro pill 54 push the movable contact 58 to contact all static contacts 56. This corresponds to both the opening and closing switches 38, 40 being closed in the cross-conduction state. As exemplified by the figure, the duration of the cross-conduction state can be adjusted by changing the size of the static and movable contacts 56, 58 and the distance between the static contacts 56. In a variant the static and movable contacts 56, 58 are configured such that the cross-conduction state is avoided. It is also possible to add a small delay

Fig. 9 shows the movable contact 58 in its final position, where it electrically connects the second pair of static contacts 56. Thus, the opening switch 38 is open and the closing switch 40 is closed.

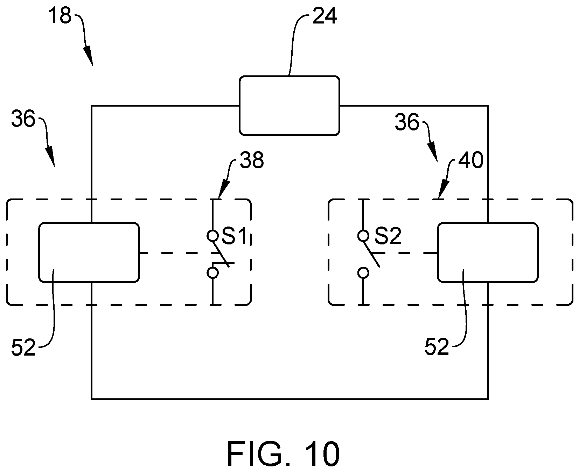

Fig. 10 shows another configuration, in which the opening switch 38 and the closing switch 40 are separate members. Both switches 38, 40 are operatively coupled to the energy storage local control unit 24. Again electrical ignition 52 is used. With this configuration the energy storage local control unit 24 generates electrical ignition pulses that activate the switches 38, 40. The time delay between the ignition pulses can be adjusted by the energy storage local control unit 24 or the length of the electrical connection from the energy storage local control unit 24 to the electrical ignition 52. With this configuration it is also possible to activate the switches 38, 40 synchronously. In this case, the cross-conduction state may not be present.

### List of reference signs:

10 energy management system
12 grid supply line
14 electrical load
16 power converter
18 energy storage module
20 rack
22 system control unit
24 energy storage local control unit
26 positive terminal
28 negative terminal
30 energy storage assembly
32 energy storage cell
35 sensor
36 switching assembly
38 opening switch
40 closing switch
42 bypass connection
44 discharging switch
46 discharging resistor
48 surge protection device (SPD)
50 pyro switch
52 electrical ignition
54 pyro pill
56 static contact
58 movable contact
138 opening switch

## Claims

1. An energy storage circuit for an energy storage module (18) comprising:
- a positive terminal (26) and a negative terminal (28);
- an energy storage assembly (30) configured for storing electrical energy, the energy storage assembly (30) including at least one energy storage cell and at least one sensor (35);
- a switching assembly (36) that is switchable into any of an operational state and a bypass state and optionally into a cross-conduction state and/or a discharge state, wherein in the operational state the switching assembly (36) electrically connects the energy storage assembly (30) to the positive and negative terminals to supply them with electrical power, wherein in the bypass state the switching assembly (36) allows a direct electrical connection between the positive terminal (26) and the negative terminal (28) wherein in the cross-conduction state the switching assembly (36) short-circuits the energy storage assembly (30) and/or connects the energy storage assembly (30) to a bypass connection (42) that connects the positive and negative terminals (26, 28); and
- a energy storage local control unit (24) that is configured for detecting a fault condition of the energy storage assembly (30) based on the at least one sensor (35), and upon detecting the fault condition, for causing, preferably initiating, the switching assembly (36) to progress from the operational state through the cross-conduction state into the bypass state.

2. The energy storage circuit according to claim 1, wherein the switching assembly (36) comprises a closing switch (40) that is normally open and configured, upon an activation signal, to close, wherein in the operational state the closing switch (40) is open, wherein in the cross-conduction state and the bypass state the closing switch (40) is closed to form an electrical connection between the positive terminal (26) and the negative terminal (28) that bypasses the energy storage assembly (30).

3. The energy storage circuit according to claim 2, wherein the closing switch (40) includes or consists of a closing pyro switch (50).

4. The energy storage circuit according to any of the preceding claims, wherein the switching assembly (36) comprises an opening switch (38, 138) that is normally closed and configured, upon an activation signal, to open, wherein in the operational state and the discharging state the opening switched is closed and in the bypass state the opening switch (38, 138) is open.

5. The energy storage circuit according to claim 4, wherein the opening switch (38, 138) includes or consists of an opening pyro switch (50) or a fuse, e.g., a DC power fuse.

6. The energy storage circuit according to any of the claims 2 to 5, wherein the closing switch (40) and the opening switch (38) are combined in a single component.

7. The energy storage circuit according to any of the preceding claims, wherein the switching assembly (36) includes a surge protection device (48) that is arranged to absorb a voltage peak caused by the switching assembly (36) progressing to the bypass state.

8. The energy storage circuit according to claim 7, wherein the surge protection device (48) is electrically coupled in parallel to the opening switch (38, 138).

9. The energy storage circuit according to any of the preceding claims, wherein the switching assembly (36) comprises at least one discharging resistor (46) that is arranged to continuously discharge the energy storage assembly (30) or the at least one energy storage cell, wherein the discharging resistor (46) is dimensioned such that a discharge time for discharging the energy storage assembly (30) or each energy storage cell is at least one day, preferably up to seven days.

10. The energy storage circuit according to any of claims 1 to 8, wherein the switching assembly (36) comprises a discharging switch (44) that, in its closed state, allows discharging of the energy storage assembly (30) via a discharging resistor (46), wherein the discharging switch (44) is operatively coupled to the energy storage local control unit (24) to be switched between the closed state and an open state, in which discharging of the energy storage assembly (30) via the discharging resistor (46) is prevented, wherein preferably the discharging resistor (46) is dimensioned such that a discharge time for discharging the energy storage assembly (30) exceeds 30 min, preferably exceeds one hour.

11. An energy storage module (18) for an energy storage management system, the energy storage module (18) comprising an energy storage circuit according to any of the preceding claims and an energy cell management system that is configured for monitoring and controlling the energy storage assembly (30).

12. A method for operating an energy storage circuit according to any of the preceding claims or an energy storage module (18) according to claim 11, the method comprising:
a) measuring at least one electrical parameter of the energy storage assembly (30) and/or the at least one energy storage cell with the at least one sensor (35);
b) evaluating the electrical parameter with the energy storage local control unit (24), and upon detecting the a fault condition causing the switching assembly (36) to progress from the operational state through the optional cross-conduction state into the bypass state.

13. The method of claim 12, wherein the energy storage local control unit (24) merely initiates the switching assembly (36) to progress through the different states, and the progression is carried out by the switching assembly (36).

14. An energy management system (10) configured for grid stabilization and/or providing peak electrical power, comprising a plurality of energy storage modules (18) according to claim 11, that are electrically connected to each other, and a system control unit (22) that is operatively coupled to each energy storage local control unit (24).

15. The system according to claim 14, wherein each energy storage local control unit (24) is configured to, upon detecting the fault condition or determining the respective energy storage module (18) to be in the bypass state, report the respective energy storage module (18) to the system control unit (22), and the system control unit (22), upon receiving the report, recalculates at least one electrical parameter of the energy management system (10), such as available electrical energy, available electrical power, available electrical current, and/or available electrical voltage, wherein each energy storage local control unit (24), upon detecting the fault condition or determining the respective energy storage module (18) to be in the bypass state, reporting the respective energy storage module (18) to the system control unit (22), and the system control unit (22), upon receiving the report, recalculating at least one electrical parameter of the energy management system (10).
